# EUROPEAN PATENT APPLICATION

(11) **EP 4 425 995 A1**
(43) Date of publication of application: **04.09.2024**
(21) Application number: 22885897.3
(22) Date of filing: 25.10.2022
(51) Int. Cl.: H04W 24/10

(54) **CHANNEL INFORMATION REPORTING METHOD, AND TERMINAL AND NETWORK-SIDE DEVICE**

(30) Priority: 29.10.2021 CN 202111276711
(71) Applicant: Vivo Mobile Communication Co., Ltd., Dongguan, Guangdong 523863 (CN)
(72) Inventor: YUAN, Jiangwei, Dongguan, Guangdong 523863 (CN); REN, Qianyao, Dongguan, Guangdong 523863 (CN); ZHENG, Kaili, Dongguan, Guangdong 523863 (CN)
(74) Representative: Murgitroyd & Company
(86) International application number: PCT/CN2022/127206
(87) International publication number: WO 2023/072020

(57) **Abstract**

This application discloses a channel information reporting method, a terminal, and a network-side device, and pertains to the field of wireless communication technologies. The channel information reporting method in embodiments of this application includes: obtaining, by a terminal, to-be-reported target time domain information based on a first report configuration, where the target time domain information is used to indicate channel change characteristics at a plurality of occasions; and reporting, by the terminal, a first report on a target resource, where the first report includes the target time domain information, and the target resource is a reporting resource indicated by the first report configuration.

## Description

### CROSS-REFERENCE TO RELATED APPLICATION

This application claims priority to Chinese Patent Application No. 202111276711.8, filed in China on October 29, 2021, which is incorporated herein by reference in its entirety.

### TECHNICAL FIELD

This application pertains to the field of wireless communication technologies, and specifically, relates to a channel information reporting method, a terminal, and a network-side device.

### BACKGROUND

In a frequency division duplex (Frequency Division Duplex, FDD) system, channel state information (Channel State Information, CSI) needs to be estimated and fed back by user equipment (User Equipment, UE) due to lack of complete reciprocity of channels. At present, the CSI fed back is obtained through calculation by the UE based on channel state information of a measurement occasion. Therefore, the CSI fed back can be understood as a channel measurement result of a specific occasion, and the network-side device performs an operation such as precoding based on the CSI fed back by the UE.

Because the CSI fed back by the UE is a channel measurement result of a specific occasion, in a scenario in which a channel coherence time becomes shorter (that is, fast fading channel), channel incoherence may occur for an occasion of CSI measured by the UE and an occasion of performing an operation such as precoding by using the CSI by a base station, resulting in degradation of system performance. For example, in a high-speed scenario, a moving speed of UE is relatively high, and Doppler shift and spread is relatively large, which leads to decrease of channel coherence time. In this case, channel incoherence may occur for an occasion of CSI measured by the UE and an occasion of performing an operation such as precoding by using the CSI by the base station, which leads to degradation of system performance.

### SUMMARY

Embodiments of this application provide a channel information reporting method, a terminal, and network-side device, so as to resolve a problem of degradation of system performance due to channel incoherence occurring for an occasion of CSI measured by UE and an occasion of performing an operation such as precoding by using the CSI by a base station.

According to a first aspect, a channel information reporting method is provided, including: obtaining, by a terminal, to-be-reported target time domain information based on a first report configuration, where the target time domain information is used to indicate channel change characteristics at a plurality of occasions; and reporting, by the terminal, a first report on a target resource, where the first report includes the target time domain information, and the target resource is a reporting resource indicated by the first report configuration.

According to a second aspect, a channel information reporting apparatus is provided, including: an obtaining module, configured to obtain to-be-reported target time domain information based on a first report configuration, where the target time domain information is used to indicate channel change characteristics at a plurality of occasions; and a first transceiver module, configured to report a first report on a target resource, where the first report includes the target time domain information, and the target resource is a reporting resource indicated by the first report configuration.

According to a third aspect, a terminal scheduling method is provided, including: receiving, by a network-side device, a first report reported by a terminal on a target resource, where the first report includes target time domain information, and the target time domain information is used to indicate channel change characteristics at a plurality of occasions; and scheduling, by the network-side device, the terminal based on the target time domain information.

According to a fourth aspect, a terminal scheduling apparatus is provided, including: a second transceiver module, configured to receive a first report reported by a terminal on a target resource, where the first report includes target time domain information, and the target time domain information is used to indicate channel change characteristics at a plurality of occasions; and a scheduling module, configured to schedule the terminal based on the target time domain information.

According to a fifth aspect, a terminal is provided, where the terminal includes a processor, a memory, and a program or instructions stored in the memory and executable on the processor, and when the program or the instructions are executed by the processor, the steps of the method according to the first aspect are implemented.

According to a sixth aspect, a terminal is provided, including a processor and a communication interface, where the processor is configured to implement the steps of the method according to the first aspect, and the communication interface is configured to communicate with a network-side device.

According to a seventh aspect, a network-side device is provided, where the network-side device includes a processor, a memory, and a program or instructions stored in the memory and executable on the processor, and when the program or the instructions are executed by the processor, the steps of the method according to the third aspect are implemented.

According to an eighth aspect, a network-side device is provided, including a processor and a communication interface, where the processor is configured to implement the steps of the method according to the third aspect, and the communication interface is configured to communicate with UE.

According to a ninth aspect, a readable storage medium is provided, where the readable storage medium has a program or instructions stored thereon, and when the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect or implement the steps of the method according to the third aspect.

According to an eleventh aspect, a computer program/program product is provided, where the computer program/program product is stored in a non-transitory storage medium, and the program/program product is executed by at least one processor to implement the steps of the method according to the first aspect or the steps of the method according to the third aspect.

In the embodiments of this application, the terminal obtains, based on the first report configuration, the target time domain information indicating the channel change characteristics at the plurality of occasions, and then has the target time domain information included in the first report for reporting, so that the network-side device can obtain the channel change characteristics at the plurality of occasions to schedule the terminal based on the channel change characteristics at the plurality of occasions. This avoids the problem that channel incoherence may occur for an occasion of CSI measured by UE and an occasion of performing an operation such as precoding by using the CSI by a base station, resulting in degradation of system performance.

### BRIEF DESCRIPTION OF DRAWINGS

FIG. 1 is a schematic diagram of a wireless communication system to which the embodiments of this application are applicable;
FIG. 2 is a schematic flowchart of a channel information reporting method according to an embodiment of this application;
FIG. 3 is a schematic flowchart of a terminal scheduling method according to an embodiment of this application;
FIG. 4 is a schematic structural flowchart of a channel information reporting apparatus according to an embodiment of this application;
FIG. 5 is a schematic structural diagram of a terminal scheduling apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

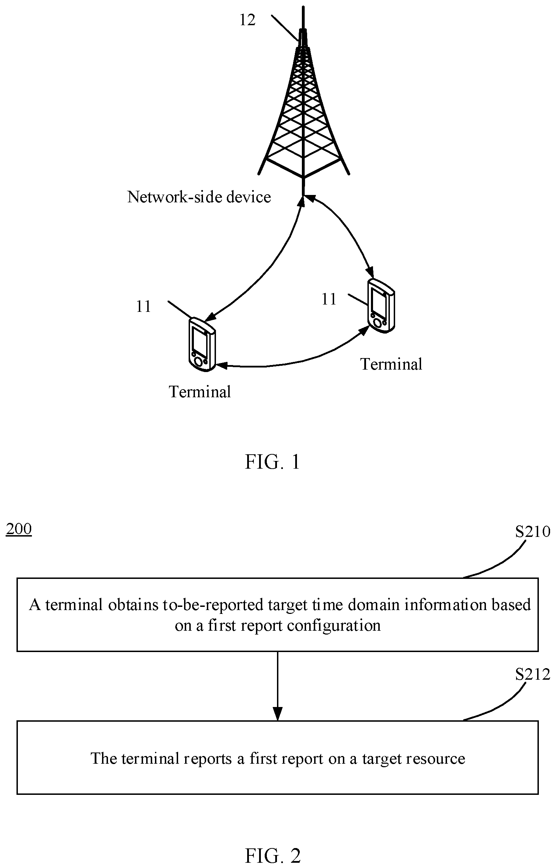

FIG. 1 is a schematic diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail the channel information reporting solution provided in the embodiments of this application by using some embodiments and application scenarios thereof with reference to the accompanying drawings.

FIG. 2 is a schematic flowchart of a channel information reporting method according to an embodiment of this application. The method 200 may be executed by a terminal. In other words, the method may be performed by software or hardware installed on the terminal. As shown in FIG. 2, the method may include the following step.

S210: The terminal obtains to-be-reported target time domain information based on a first report configuration, where the target time domain information is used to indicate channel change characteristics at a plurality of occasions.

In this embodiment of this application, the target time domain information is used to indicate channel change characteristics at a plurality of occasions, for example, to indicate channel amplitude and/or channel phase change characteristics at the plurality of occasions. The network-side device performs channel prediction based on the target time domain information.

In this embodiment of this application, the plurality of occasions may be a plurality of adjacent slots or a plurality of slots with fixed gaps, which is not specifically limited in this embodiment of this application.

Optionally, the target time domain information includes but is not limited to at least one of the following:
(1) Information about the target time domain channel, where the information about the target time domain channel includes channel information obtained by the terminal based on a CSI reference signal (CSI Reference Signal, CSI-RS) at the plurality of occasions.

For example, the target time domain information is a channel measurement result H=[h_1,h_2,...,h_k] obtained through channel measurement on the CSI-RS by the terminal in k slots (slots).

(2) Correlation information of the target time domain channel, where the correlation information of the target time domain channel includes characteristic information of channel information at the plurality of occasions.

For example, when channel measurement results obtained through channel measurement on the CSI-RS by the terminal in k slots are H=[h_1,h_2,...,h_k], a time domain autocorrelation matrix of the channel is H^{H}H, and an eigenvalue decomposition result is H^{H}H = VDV^{H}, where V represents an eigenvector matrix, with each column representing one eigenvector, and D represents a diagonal matrix formed by eigenvalues corresponding to the eigenvectors. The terminal can form the target time domain information by using eigenvectors and their eigenvalues specified by the network-side device or selected by the terminal.

(3) Doppler (doppler) domain channel information, where the Doppler domain channel information includes information obtained by transforming the characteristic information in a predetermined manner.

For example, when channel measurement results obtained through channel measurement on the CSI-RS by the terminal in k slots are H=[h_1,h_2,...,h_k], a time domain autocorrelation matrix of the channel is H^{H}H, and an eigenvalue decomposition result is H^{H}H = VDV^{H}, where V represents an eigenvector matrix, with each column representing one eigenvector, and D represents a diagonal matrix formed by eigenvalues corresponding to the eigenvectors. The terminal performs discrete Fourier transform (Discrete Fourier Transform, DFT) on the eigenvector matrix to obtain a transformed matrix V' = W_d*V, where W_d is a DFT matrix. The terminal selects a specific value from each column in the matrix V', a row vector sequence number (vector identifier) of W_d corresponding to the specific value, and a corresponding eigenvalue to form the target time domain information.

S212: The terminal reports a first report on a target resource, where the first report includes the target time domain information, and the target resource is a reporting resource indicated by the first report configuration.

In this embodiment of this application, the first report may be periodic, semi-persistent, or aperiodic. This is not limited in the embodiments of this application.

In the technical solution provided in this embodiment of this application, the terminal obtains, based on the first report configuration, the target time domain information indicating the channel change characteristics at the plurality of occasions, and then has the target time domain information included in the first report for reporting, so that the network-side device can obtain the channel change characteristics at the plurality of occasions to schedule the terminal based on the channel change characteristics at the plurality of occasions. This avoids the problem that channel incoherence may occur for an occasion of CSI measured by UE and an occasion of performing an operation such as precoding by using the CSI by a base station, resulting in degradation of system performance. In addition, the network-side device may perform channel prediction based on the channel change characteristics at the plurality of occasions, so as to improve accuracy of channel prediction.

In this embodiment of this application, the first report configuration may be configured by the network-side device for the terminal, for example, the network-side device configures the first report configuration for the terminal by using a higher-layer parameter, for example, configures the first report configuration by using a radio resource control (Radio Resource Control, RRC) parameter.

Optionally, one first report configuration may correspond to one or more first reports.

Optionally, the first report configuration may include at least one of the following information (1) to (4).
(1) First indication information, where the first indication information is used to indicate content information reported in the first report, where the content information includes the target time domain information.

For example, the first report configuration may include a parameter of one report quantity, and a specific value of this parameter indicates content information reported in the first report. For example, the value of this parameter may include a first preset value, and the first preset value indicates that the reported content information includes the target time domain information.

In a possible implementation, the first report configuration may be a configuration dedicated to indicating the terminal to report the target time domain information. In this case, the value of the report (quantity) parameter may be set as a first preset value in the first report configuration to indicate the terminal to report the target time domain information. In this manner, the content reported in the first report can be reduced, and a bandwidth or time-frequency resource occupied by the first report can be reduced.

In another possible implementation, the first report configuration may alternatively reuse an existing CSI report configuration (CSI-ReportConfig), and the first indication information reuses a parameter reportQuantity in the CSI-ReportConfig. For example, a value of the parameter reportQuantity includes "DMI (doppler matrix indicator, Doppler Matrix Indicator)", and content information to be reported as indicated by the DMI includes the target time domain information.

In the foregoing possible implementations, optionally, the content information indicated by the first indication information may further include at least one of the following: CSI-RS resource indicator (CSI-RS Resource Indicator, CRI), rank indicator (Rank indicator, RI), channel quality indicator (Channel quality indicator, CQI), and precoding matrix indicator (Precoding matrix indicator, PMI).

For example, the reportQuantity field in the RRC information element (Information Element, IE) CSI-ReportConfig indicates that content information included in the CSI report corresponding to the current CSI-ReportConfig includes a CRI, RI, CQI, PMI, and DMI, where DMI represents the target time domain information.

(2) Second indication information, where the second indication information is used to indicate frequency domain information corresponding to the target time domain information.

The second indication information may indicate a frequency domain configuration, and the frequency domain configuration indicates frequency domain information corresponding to the target time domain information. For example, the second indication information indicates that the target time domain information can be obtained through which one subband or obtained through wideband.

For example, a frequency domain configuration field of time domain information can be added in CSI-ReportConfig. If the frequency domain configuration field is set to wideband, it indicates that the target time domain information is obtained through channels of the entire frequency domain. If this frequency domain configuration field is set to subband, a subband (a subband corresponding to a bit being 1) used for obtaining the target time domain information are indicated by using a bitmap.

(3) Third indication information, where the third indication information is used to indicate a codebook configuration associated with the target time domain information.

Optionally, the codebook configuration includes codebook subset restriction information (codebook subset restriction), rank restriction information, and codebook configuration parameter information. The codebook configuration parameter information includes but is not limited to an oversampling factor, the number of taps in doppler domain, a length of tap search window in doppler domain, a starting position of the tap search window in doppler domain, and the like.

The codebook subset reported in the first report can be restricted by the codebook subset restriction information, so as to reduce computational complexity and reduce overheads for the first report.

(4) Fourth indication information, where the fourth indication information is used to indicate at least one of the following: a measurement resource corresponding to the target time domain information and a measurement port corresponding to the target time domain information.

In this possible implementation, the fourth indication information may indicate that measurement is performed by using which channel measurement resources (Channel Measurement Resource, CMR), or which ports of which channel measurement resources, or which ports of a specific channel measurement resource, so as to obtain corresponding target time domain information by using measurement results. In a possible implementation, the fourth indication information may indicate one port combination, or a resource combination, or a port and resource combination in a manner of a combination number, or the fourth indication information may indicate a measurement resource and a measurement resource port by using a bit sequence.

In a possible implementation, in S210, the obtaining the to-be-reported target time domain information may include: performing channel measurement on at least one channel measurement resource CMR at each of the plurality of occasions to obtain measurement results of a plurality of channels; and obtaining the to-be-reported target time domain information based on the measurement results of the plurality of channels. In this possible implementation, the terminal obtains the to-be-reported target time domain information based on the measurement results obtained through channel measurement on the CMR at each occasion.

In a possible implementation, the performing channel measurement on at least one channel measurement resource CMR at each of the plurality of occasions may include: the terminal obtains a plurality of CMRs based on CSI-RS information configured or indicated by a network-side device, where time domains occupied by the CMRs are not completely identical, and the CSI-RS information includes one of the following: a plurality of CSI-RS resources, at least one CSI-RS resource set, and at least one CSI-RS resource group; and the terminal performs channel measurement on the plurality of CMRs.

For example, the network-side device configures or indicates one dedicated CSI-RS set that is to be used by the UE for obtaining channels required for calculating the time domain information, and the terminal performs measurement on all CMRs in the CSI-RS set to obtain channel measurement results at a plurality of occasions, and obtains the target time domain information based on the channel measurement results at the plurality of occasions. The UE does not expect a same slot offset for the CMRs in the CSI-RS set.

In another possible implementation, the performing channel measurement on at least one channel measurement resource at each of the plurality of occasions may include: obtaining a target measurement resource and/or a target measurement port indicated by fourth indication information in the first report configuration, where the fourth indication information is used to indicate at least one of the following: a measurement resource corresponding to the target time domain information and a measurement port corresponding to the target time domain information; and performing channel measurement on the target measurement resource and/or the target measurement port at each of the plurality of occasions.

For example, the network-side device configures a measurement resource indication configuration (that is, the fourth indication information) in the first report configuration, and the configuration indicates performing channel measurement on CMR0 and CMR2 in four reference signal resources (CMR0, CMR1, CMR2, CMR3) configured by the network-side device, so as to obtain the target time domain information of the channels.

For another example, the network device configures a port indication configuration in the first report configuration, and the configuration indicates performing measurement on a port with a configured reference signal resource (CMR0) port number being 3000, so as to obtain the target time domain information of the channels.

In a possible implementation, the obtaining the to-be-reported target time domain information based on the measurement results of the plurality of channels may include: obtaining measurement results of a plurality of target channels based on the measurement results of the plurality of channels; and using the measurement results of the plurality of target channels as the to-be-reported target time domain information. For example, part or all of the plurality of channels are selected as the target channels, and the measurement results of the target channels are directly reported as the target time domain information.

Alternatively, in another possible implementation, the obtaining the to-be-reported target time domain information based on the measurement results of the plurality of channels includes: obtaining measurement results of a plurality of target channels based on the measurement results of the plurality of channels; and calculating a plurality of eigenvectors and/or a plurality of eigenvalues of an autocorrelation matrix of a target matrix, where the target matrix includes measurement results of a plurality of target channels, and the target time domain information includes at least one of the following: the plurality of eigenvectors and the plurality of eigenvalues.

For example, channel measurement results of the terminal in k slots are H=[h_1,h_2,...,h_k], a time domain autocorrelation matrix of the channel is H^{H}H, and an eigenvalue decomposition result is H^{H}H = VDV^{H}, where V represents an eigenvector matrix, with each column representing one eigenvector, and D represents a diagonal matrix formed by eigenvalues corresponding to the eigenvectors. The terminal can form the target time domain information by using eigenvectors and their eigenvalues specified by the network-side device or selected by the terminal. This implementation can improve accuracy of channel prediction for the network-side device.

In another possible implementation, the obtaining the to-be-reported target time domain information based on the measurement results of the plurality of channels may include:
step 1: obtaining measurement results of a plurality of target channels based on the measurement results of the plurality of channels;
step 2: calculating a plurality of eigenvectors and a plurality of eigenvalues of an autocorrelation matrix of a target matrix, where the target matrix is formed by the measurement results of the plurality of target channels;
step 3: performing, based on a preset discrete Fourier transform matrix, discrete Fourier transform on the matrix formed by the eigenvectors;
step 4: selecting at least one specific value from each column of a transformed matrix; and
step 5: obtaining the target time domain information based on a plurality of selected specific values, where the target time domain information includes each specific value and a row vector identifier of a discrete Fourier transform matrix corresponding to the each specific value, or the target time domain information includes each specific value, a row vector identifier of the discrete Fourier transform matrix corresponding to the each specific value, and an eigenvalue corresponding to the each specific value.

For example, channel measurement results in k slots are H=[h_1,h__2,...,h_k], a time domain autocorrelation matrix of the channel is H^{H}H, and an eigenvalue decomposition result is H^{H}H = VDV^{H}, where V represents an eigenvector matrix, with each column representing one eigenvector, and D represents a diagonal matrix formed by eigenvalues corresponding to the eigenvectors. The terminal performs DFT transform on the eigenvector matrix to obtain a transformed matrix V' = W_d*V, where W_d is a DFT matrix. The terminal selects a specific value from each column in the matrix V', a row vector sequence number (vector identifier) of W_d corresponding to the specific value, and a corresponding eigenvalue to form the target time domain information.

In the foregoing possible implementation, overheads for reporting the target time domain information can be reduced.

In the foregoing possible implementation, optionally, the number of specific values selected from each column of the transformed matrix is configured by a network-side device, or the number of specific values selected from each column of the transformed matrix is selected by the terminal.

Further, the target time domain information may further include the number of specific values that is selected by the terminal from each column of the transformed matrix.

For example, in the foregoing example, the number of specific values for each column in the terminal selection matrix V' may be configured by a base station or selected by the terminal. If the number of specific values is selected by the terminal, the target time domain information further includes the number of specific values selected by the terminal.

In the foregoing possible implementations, optionally, the obtaining measurement results of a plurality of target channels based on the measurement results of the plurality of channels may include selecting the measurement results of the plurality of target channels corresponding to the first information from the measurement results of the plurality of channels, where the first information includes at least one of the following: at least one pair of transceiver ports and at least one carrier.

Optionally, the first information is configured by the network-side device, or the first information is selected by the terminal. Optionally, the target time domain information further includes the first information.

For example, in the foregoing optional implementation, the target time domain information may include channel measurement results of one or more pairs of specific transceiver ports, where one or more pairs of transceiver ports may be configured by the network or selected by the terminal, and if the one or more pairs of transceiver ports is selected by the terminal, the time domain information may also include port information selected by the terminal.

For example, channel measurement results of k slots are H=[h_1,h_2,...,h_k], where h_m,m=1,2,...,k are column vectors, and the dimension is a product of the number of transceiver ports (that is, N_t * N_r). The terminal obtains one or more pairs of transceiver ports with best channel quality according to the maximum capacity, maximum data volume, or other criteria. Then, the terminal selects values of corresponding transceiver ports in each column, so as to form the target time domain information along with the selected port information.

Alternatively, the target time domain information can include channel measurement results of one or more pairs of transceiver ports on one or more specific carriers, where the one or more carriers may be configured by the network-side device or selected by the terminal, and one or more pairs of carriers may be configured by the network-side device or selected by the terminal; in a case of being selected by the terminal, the target time domain information may also include port information and/or carrier information selected by the terminal.

For example, channel measurement results of k slots are H=[h_1,h_2,...,h_k], where h_m,m=1,2,...,k are column vectors, and the dimension is a product (that is, N_t * N_r * N_subc) of the number of transceiver ports and the number of subcarriers. The terminal obtains one or more carriers with best channel quality according to the maximum capacity, maximum data volume, or other criteria, and then, based on the obtained carrier, selects one or more pairs of transceiver ports with best channel quality according to the maximum capacity, maximum data volume, or other criteria. Then, the terminal selects values of corresponding carriers and transceiver ports from each column, so as to form the target time domain information along with the selected port information and carrier information.

In the foregoing possible implementation, the eigenvalues are not included in the target time domain information in a case that the terminal sets no normalization operation to be performed on an eigenvector or the network-side device indicates no normalization operation to be performed on an eigenvector. That is, in a case that the modulus of the eigenvector is not 1 or the eigenvalue is not normalized, the target time domain information does not include the eigenvalue, so as to reduce overheads.

In a possible implementation, in S212, that the terminal reports the first report on the target resource includes: generating the first report; and mapping the first report on to an uplink control information (Uplink Control Information, UCI) bit sequence on the target resource. That is, in this possible implementation, the first report is reported as a part of UCI.

In the related art, in type (Type)1 and Type2 CSI reporting modes, a two-level frequency domain-based codebook structure is used, that is, W(s) = W1 * W2(s), where s=0,1,...,S, S represents the total number of subbands, W1 is subband-irrelative and is formed by 2*N discrete Fourier transform DFT vectors, and each DFT vector represents one beam in spatial domain. W2(s) represents a subband-related coefficient of the s-th configuration. According to different codebook types, functions of the coefficient include beam (beam) selection, beam weighted combination, and beam phase adjustment. In addition, in the related art, Type2 CSI reporting mode has been further enhanced, that is, to etype2 CSI reporting mode. This mode mainly solves the problem of large feedback overheads for the two-level frequency domain-based codebook feedback mode, and uses a DFT matrix to compress the frequency domain coefficient matrix (W2) and transfer the frequency domain coefficient to the delay domain for quantitative reporting, thus effectively reducing feedback overheads. The codebook structure is extended to a three-level codebook structure, that is, W(s) = W1 * W2(d) * Wf.H(), where W1 is formed by 2*N subband-irrelative DFT vectors, each DFT vector represents one beam in spatial domain, W2(d) represents a coefficient related to delay domain, and Wf is formed by part of column vectors of the DFT matrix. In related art, a CSI report uses feedback based on physical uplink shared channel (Physical Uplink Shared Channel, PUSCH), and one CSI report includes two parts (Part1 and Part2), where Part1 has a fixed load size and also indicates the number of information bits of Part2. For Type1 CSI feedback, Part1 includes one or more of RI, CRI, and CQI of a first codeword, and Part2 includes one or more of PMI and CQI of a second codeword. For Type2 CSI feedback, Part1 includes one or more of RI, CQI, and Type2 CSI per-layer non-zero wideband amplitude coefficient indicator, and Part2 includes PMI of Type2 CSI. For enhanced Type2 CSI feedback, Part1 includes one or more of RI, CQI, and an indicator of the total number of enhanced Type2 CSI cross-layer non-zero amplitude coefficients, and Type2 includes PMI of enhanced Type2 CSI.

In this embodiment of this application, the first report includes the target time domain information, and a manner of generating the first report can use different manners based on different granularities of the first report, which are described below separately.
(I) The granularity of PMI and/or CQI reported by the first report that is set in the first report configuration is wideband, for example, the granularity of PMI and CQI set in the CSI report configuration is wideband (wideband).

In this case, the generating the first report may include one of the following:
(1) In a case that second indication information in the first report configuration indicates wideband or information about at least one subband, and the first report corresponding to the first report configuration contains only a first part, mapping the target time domain information and another parameter in the first report onto the first part, with a mapping position of the target time domain information being behind a mapping position of the another parameter in the first report, where the second indication information is used to indicate frequency domain information corresponding to the target time domain information, and the another parameter is a parameter in the first report other than the target time domain information.

For example, the frequency domain configuration corresponding to the target time domain information is wideband, and a CSI report corresponding to the CSI report configuration contains only one part. Then, the target time domain information is mapped onto Part1, and a mapping position is behind a mapping position of the another parameter (for example, CRI, RI, CQI, or PMI) of the CSI report.

For another example, the frequency domain configuration corresponding to the target time domain information is subband, and a CSI report corresponding to the CSI report configuration contains only one part. In this case, the target time domain information is mapped onto Part1, and a mapping position is behind a mapping position of the another parameter (for example, CRI, RI, CQI, or PMI) of the CSI report.

(2) In a case that the second indication information in the first report configuration indicates information about at least one subband, and that the first report corresponding to the first report configuration includes a first part and a second part, mapping another parameter in the first report to the first part, and mapping the target time domain information to the second part.

For example, if the frequency domain configuration corresponding to the target time domain information is subband, the CSI report corresponding to the CSI report configuration contains two parts, and in this case, the target time domain information is mapped onto Part2.

(II) The granularity of PMI and/or CQI reported by the first report that is set in the first report configuration is at least one subband.

In this case, the generating the first report may include: in a case that the first report corresponding to the first report configuration contains a first part and a second part, mapping the target time domain information and another parameter included in the second part of the first report onto the second part, with a mapping position of the target time domain information being behind a mapping position of the another parameter, where the another parameter in the second part are parameters in the second part of the first report other than the target time domain information.

For example, the granularity of PMI and CQI configured in the CSI report configuration is subband, the CSI report corresponding to the CSI report configuration contains two parts, and the target time domain information is mapped onto Part2, where a mapping position is behind a mapping position of the another parameter (CQI, PMI, or the like) of the CSI report in Part2.

In the foregoing possible implementation, in a case that the target time domain information includes information selected by the terminal, the first part further includes indication information for indicating a bit length of the second part. For example, the target time domain information includes the first information selected by the terminal or the number of specific values selected by the terminal from each column of the transformed matrix. In this possible implementation, in a case that the network-side device cannot learn a bit length corresponding to the target time domain information, indication may be made to the network-side device by using the indication information in the first part, so that the network-side device is able to learn the bit length of the second part.

Alternatively, in a case that the terminal determines the target time domain information based on the selected information, the first part also includes the information selected by the terminal. For example, the target time domain information includes the first information selected by the terminal or the number of specific values selected by the terminal from each column of the transformed matrix. In this possible implementation, in a case that the network-side device cannot learn a bit length corresponding to the target time domain information, the information selected by the terminal can be included in the first part, so that the network-side device can determine the bit length of the target time domain information.

In a possible implementation, the mapping the first report onto a UCI bit sequence includes one of the following:
(1) generating a first UCI bit sequence based on another parameter in the first report, generating a second UCI bit sequence based on the target time domain information, and mapping a UCI bit sequence including the first UCI bit sequence and the second UCI bit sequence onto the target resource; and
(2) generating a first UCI bit sequence based on a first part in the first report, generating a second UCI bit sequence based on a second part in the first report, and mapping a UCI bit sequence including the first UCI bit sequence and the second UCI bit sequence onto the target resource, where the second part includes the target time domain information.

In the foregoing possible implementation, the first UCI bit sequence further includes sixth indication information, where the sixth indication information is used to indicate a bit length of the second UCI bit sequence, or the sixth indication information is used for determining the bit length of the second UCI bit sequence. For example, if the target time domain information is a terminal selection result (that is, the network-side device cannot learn the length of the second UCI bit sequence), the first UCI bit sequence contains the sixth indication information, and the network-side device may explicitly or implicitly obtain the bit length of the second UCI bit sequence through a corresponding indication. For example, the target time domain information is determined based on the first information selected by the terminal, or the target time domain information is obtained based on a specific value selected by the terminal from each column of the transformed matrix. In this case, the sixth indication information is further included in the first UCI bit sequence.

Optionally, a bit length of the second UCI bit sequence includes a length of a subsequence, related to the target time domain information, in the second UCI bit sequence.

According to the technical solution provided in this embodiment of this application, the terminal can perform measurement and feed back the channel change characteristics at the plurality of occasions, thus resolving the problem that time domain related information of channels at a plurality of occasions cannot be fed back in the current CSI feedback.

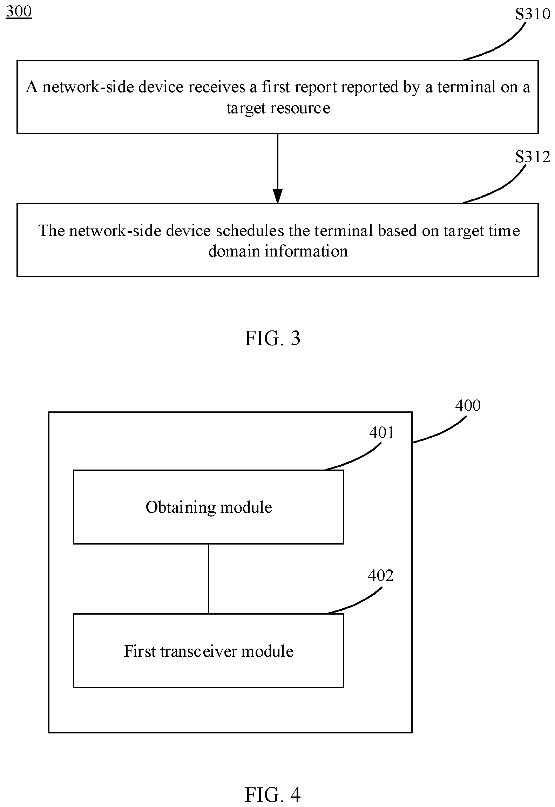

FIG. 3 is a schematic flowchart of a terminal scheduling method according to an embodiment of this application. The method 300 can be executed by a network-side device. In other words, the method may be performed by software or hardware installed on the network-side device. This method is a method executed by the network-side device corresponding to method 200, and has possible implementations corresponding to method 200. The behaviors of the network-side device are mainly described below, and for other related content, reference may be made to the descriptions in the method 200.

As shown in FIG. 3, the method may include the following steps.

S310: The network-side device receives a first report reported by a terminal on a target resource, where the first report includes target time domain information, and the target time domain information is used to indicate channel change characteristics at a plurality of occasions.

The terminal may report the first report in a manner described in the foregoing method 200, and the first report is the same as the first report in the method 200. For details, refer to the descriptions in the method 200.

S312: The network-side device schedules the terminal based on the target time domain information.

For example, the network-side device can perform channel prediction based on the target time domain information, so as to adjust a CRI, RI, CQI or PMI reported by the terminal, and schedule the terminal based on the adjusted CRI, RI, CQI or PMI value, for example, perform an operation such as precoding.

In the technical solution provided in this embodiment of this application, the terminal reports the channel change characteristics at the plurality of occasions to the network-side device, and the network-side device schedules the terminal based on content reported by the terminal, thus avoiding the problem that channel incoherence may occur for an occasion of CSI measured by UE and an occasion of performing an operation such as precoding by using the CSI by a base station, resulting in degradation of system performance. In addition, the network-side device may perform channel prediction based on the channel change characteristics at the plurality of occasions, so as to improve accuracy of channel prediction.

In a possible implementation, before the receiving, by a network-side device, a first report reported by a terminal on a target resource, the method further includes: sending, by the network-side device, a first report configuration to the terminal, where the first report configuration includes indication information of the target resource.

In a possible implementation, the first report configuration further includes at least one of the following information:
(1) first indication information, where the first indication information is used to indicate content information reported in the first report, where the content information includes the target time domain information;
(2) second indication information, where the second indication information is used to indicate frequency domain information corresponding to the target time domain information;
(3) third indication information, where the third indication information is used to indicate a codebook configuration associated with the target time domain information; and
(4) fourth indication information, where the fourth indication information is used to indicate at least one of the following: a measurement resource corresponding to the target time domain information and a measurement port corresponding to the target time domain information.

In a possible implementation, the content information further includes at least one of the following:
CRI;
RI;
CQI; and
PMI.

In a possible implementation, the frequency domain information includes information about at least one subband, or wideband.

In a possible implementation, the codebook configuration includes codebook subset restriction information, rank restriction information, and codebook configuration parameter information.

In a possible implementation, the target time domain information includes at least one of the following:
(1) information about the target time domain channel, where the information about the target time domain channel includes channel information obtained by the terminal based on a CSI-RS at the plurality of occasions;
(2) correlation information of the target time domain channel, where the correlation information of the target time domain channel includes characteristic information of channel information at the plurality of occasions; and
(3) Doppler domain channel information, where the Doppler domain channel information includes information obtained by transforming the characteristic information in a predetermined manner.

In a possible implementation, the receiving, by a network-side device, a first report reported by a terminal on a target resource includes: monitoring, on the target resource, UCI bits transmitted by the terminal to obtain the first report.

In a possible implementation, the monitoring UCI bits transmitted by the terminal includes: monitoring, on the target resource, a first UCI bit sequence and a second UCI bit sequence, obtaining another parameter in the first report from the first UCI bit sequence, and obtaining the target time domain information from the second UCI bit sequence, where the another parameter is a parameter in the first report other than the target time domain information.

In a possible implementation, the first UCI bit sequence further includes sixth indication information, where the sixth indication information is used to indicate a bit length of the second UCI bit sequence, or the sixth indication information is used for determining the bit length of the second UCI bit sequence.

It should be noted that, in the channel information reporting method provided by this embodiment of this application, the execution body may be a channel information reporting apparatus, or a control module for executing the channel information reporting method in the channel information reporting apparatus. In this embodiment of this application, the channel information reporting method being performed by the channel information reporting apparatus is used as an example to describe the channel information reporting apparatus provided in the embodiments of this application.

FIG. 4 is a schematic structural diagram of a channel information reporting apparatus according to an embodiment of this application. As shown in FIG. 4, the reporting apparatus 400 mainly includes: an obtaining module 401 and a first transceiver module 402.

In this embodiment of this application, the obtaining module 401 is configured to obtain to-be-reported target time domain information based on a first report configuration, where the target time domain information is used to indicate channel change characteristics at a plurality of occasions. The first transceiver module 402 is configured to report a first report on a target resource, where the first report includes the target time domain information, and the target resource is a reporting resource indicated by the first report configuration.

In a possible implementation, the target time domain information includes at least one of the following:
information about the target time domain channel, where the information about the target time domain channel includes channel information obtained by the terminal based on a CSI-RS at the plurality of occasions;
correlation information of the target time domain channel, where the correlation information of the target time domain channel includes characteristic information of channel information at the plurality of occasions; and

Doppler domain channel information, where the Doppler domain channel information includes information obtained by transforming the characteristic information in a predetermined manner.

In a possible implementation, the first report configuration includes at least one of the following information:
first indication information, where the first indication information is used to indicate content information reported in the first report, where the content information includes the target time domain information;
second indication information, where the second indication information is used to indicate frequency domain information corresponding to the target time domain information;
third indication information, where the third indication information is used to indicate a codebook configuration associated with the target time domain information; and
fourth indication information, where the fourth indication information is used to indicate at least one of the following: a measurement resource corresponding to the target time domain information and a measurement port corresponding to the target time domain information.

In a possible implementation, the content information further includes at least one of the following:
CRI;
RI;
CQI; and
PMI.

In a possible implementation, the frequency domain information includes information about at least one subband, or wideband.

In a possible implementation, the codebook configuration includes codebook subset restriction information, rank restriction information, and codebook configuration parameter information.

In a possible implementation, that the obtaining module 401 obtains the to-be-reported target time domain information includes:
performing channel measurement on at least one channel measurement resource CMR at each of the plurality of occasions to obtain measurement results of a plurality of channels; and
obtaining the to-be-reported target time domain information based on the measurement results of the plurality of channels.

In a possible implementation, that the obtaining module 401 performs channel measurement on the at least one channel measurement resource at each of the plurality of occasions includes:
obtaining a plurality of CMRs based on CSI-RS information configured or indicated by a network-side device, where time domains occupied by the CMRs are not completely identical, and the CSI-RS information includes one of the following: a plurality of CSI-RS resources, at least one CSI-RS resource set, and at least one CSI-RS resource group; and
performing channel measurement on the plurality of CMRs.

In a possible implementation, that the obtaining module 401 performs channel measurement on the at least one channel measurement resource at each of the plurality of occasions includes:
obtaining a target measurement resource and/or a target measurement port indicated by fourth indication information in the first report configuration, where the fourth indication information is used to indicate at least one of the following: a measurement resource corresponding to the target time domain information and a measurement port corresponding to the target time domain information; and
performing channel measurement on the target measurement resource and/or the target measurement port at each of the plurality of occasions.

In a possible implementation, that the obtaining module 401 obtains the to-be-reported target time domain information based on the measurement results of the plurality of channels includes:
obtaining measurement results of a plurality of target channels based on the measurement results of the plurality of channels; and
using the measurement results of the plurality of target channels as the to-be-reported target time domain information.

In a possible implementation, that the obtaining module 401 obtains the to-be-reported target time domain information based on the measurement results of the plurality of channels includes:
obtaining measurement results of a plurality of target channels based on the measurement results of the plurality of channels; and
calculating a plurality of eigenvectors and/or a plurality of eigenvalues of an autocorrelation matrix of a target matrix, where the target matrix includes measurement results of a plurality of target channels, and the target time domain information includes at least one of the following: the plurality of eigenvectors and the plurality of eigenvalues.

In a possible implementation, that the obtaining module 401 obtains the to-be-reported target time domain information based on the measurement results of the plurality of channels includes:
obtaining measurement results of a plurality of target channels based on the measurement results of the plurality of channels;
calculating a plurality of eigenvectors and a plurality of eigenvalues of an autocorrelation matrix of a target matrix, where the target matrix is formed by the measurement results of the plurality of target channels;
performing, based on a preset discrete Fourier transform matrix, discrete Fourier transform on the matrix formed by the eigenvectors;
selecting at least one specific value from each column of a transformed matrix; and
obtaining the target time domain information based on a plurality of selected specific values, where the target time domain information includes each specific value and a row vector identifier of a discrete Fourier transform matrix corresponding to the each specific value, or the target time domain information includes each specific value, a row vector identifier of the discrete Fourier transform matrix corresponding to the each specific value, and an eigenvalue corresponding to the each specific value.

In a possible implementation, the number of specific values selected from each column of the transformed matrix is configured by the network-side device, or the number of specific values selected from each column of the transformed matrix is selected by the terminal.

In a possible implementation, the target time domain information further includes the number of specific values that is selected by the terminal from each column of the transformed matrix.

In a possible implementation, that the obtaining module 401 obtains the measurement results of the plurality of target channels based on the measurement results of the plurality of channels includes:
selecting measurement results of a plurality of target channels corresponding to first information from the measurement results of the plurality of channels, where the first information includes at least one of the following: at least one pair of transceiver ports and at least one carrier.

In a possible implementation, the first information is configured by the network-side device, or the first information is selected by the terminal.

In a possible implementation, the target time domain information further includes the first information selected by the terminal.

In a possible implementation, the eigenvalues are not included in the target time domain information in a case that the terminal sets no normalization operation to be performed on an eigenvector or the network-side device indicates no normalization operation to be performed on an eigenvector.

In a possible implementation, that the first transceiver module 402 reports the first report on the target resource includes:
generating the first report; and
mapping the first report onto a UCI bit sequence on the target resource.

In a possible implementation, in a case that a granularity of PMI and/or a granularity of CQI reported by the first report configured in the first report configuration are wideband, that the first transceiver module 402 generates the first report includes one of the following:
in a case that second indication information in the first report configuration indicates wideband or information about at least one subband, and that the first report corresponding to the first report configuration contains only a first part, mapping the target time domain information and another parameter in the first report onto the first part, with a mapping position of the target time domain information being behind a mapping position of the another parameter in the first report, where the second indication information is used to indicate frequency domain information corresponding to the target time domain information, and the another parameter is a parameter in the first report other than the target time domain information; and
in a case that the second indication information in the first report configuration indicates information about at least one subband, and that the first report corresponding to the first report configuration includes a first part and a second part, mapping the another parameter in the first report onto the first part, and mapping the target time domain information onto the second part.

In a possible implementation, in a case that a granularity of PMI and/or a granularity of CQI reported by the first report configured in the first report configuration is at least one subband, that the first transceiver module 402 generates the first report includes the following:
in a case that the first report corresponding to the first report configuration contains a first part and a second part, mapping the target time domain information and another parameter included in the second part of the first report onto the second part, with a mapping position of the target time domain information being behind a mapping position of the another parameter, where the another parameter in the second part are parameters in the second part of the first report other than the target time domain information.

In a possible implementation, in a case that the target time domain information includes information selected by the terminal, the first part further includes indication information for indicating a bit length of the second part.

In a possible implementation, in a case that the terminal determines the target time domain information based on information selected by the terminal, the first part further includes the information selected by the terminal.

In a possible implementation, that the first transceiver module 402 maps the first report onto a UCI bit sequence on the target resource includes one of the following:
generating a first UCI bit sequence based on another parameter in the first report, generating a second UCI bit sequence based on the target time domain information, and mapping a UCI bit sequence including the first UCI bit sequence and the second UCI bit sequence onto the target resource; and
generating a first UCI bit sequence based on a first part in the first report, generating a second UCI bit sequence based on a second part in the first report, and mapping a UCI bit sequence including the first UCI bit sequence and the second UCI bit sequence onto the target resource, where the second part includes the target time domain information.

In a possible implementation, the first UCI bit sequence further includes sixth indication information, where the sixth indication information is used to indicate a bit length of the second UCI bit sequence, or the sixth indication information is used for determining the bit length of the second UCI bit sequence.

In a possible implementation, a bit length of the second UCI bit sequence includes a length of a subsequence, related to the target time domain information, in the second UCI bit sequence.

The channel information reporting apparatus in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The channel information reporting apparatus in this embodiment of this application may be an apparatus with an operating system. The operating system may be an Android (Android) operating system, an iOS operating system, or other possible operating systems, and is not specifically limited in the embodiments of this application.

The channel information reporting apparatus provided in this embodiment of this application is capable of implementing the processes implemented by the terminal in the method embodiments in FIG. 2 and FIG. 3, with the same technical effects achieved. To avoid repetition, details are not described herein again.

It should be noted that, for the terminal scheduling method provided by the embodiments of this application, the execution body may be a terminal scheduling apparatus, or a control module for executing the terminal scheduling method in the terminal scheduling apparatus. In this embodiment of this application, the terminal scheduling apparatus provided in the embodiments of this application is described by using the terminal scheduling method being executed by the terminal scheduling apparatus as an example.

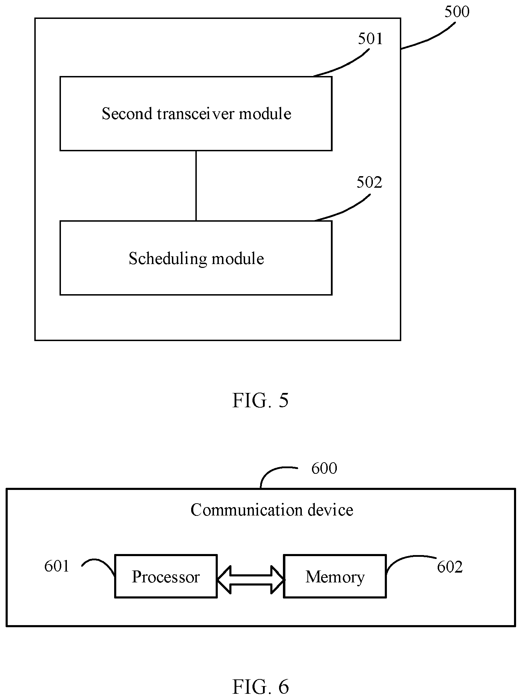

FIG. 5 is a schematic structural diagram of a terminal scheduling apparatus according to an embodiment of this application. As shown in FIG. 5, the scheduling apparatus 500 mainly includes: a second transceiver module 501, configured to receive a first report reported by a terminal on a target resource, where the first report includes target time domain information, and the target time domain information is used to indicate channel change characteristics at a plurality of occasions; and a scheduling module 502, configured to schedule the terminal based on the target time domain information.

In a possible implementation, the second transceiver module 501 is further configured to send a first report configuration to the terminal before the network-side device receives the first report reported by the terminal on the target resource, where the first report configuration includes indication information of the target resource.

In a possible implementation, the first report configuration further includes at least one of the following information:
first indication information, where the first indication information is used to indicate content information reported in the first report, where the content information includes the target time domain information;
second indication information, where the second indication information is used to indicate frequency domain information corresponding to the target time domain information;
third indication information, where the third indication information is used to indicate a codebook configuration associated with the target time domain information; and
fourth indication information, where the fourth indication information is used to indicate at least one of the following: a measurement resource corresponding to the target time domain information and a measurement port corresponding to the target time domain information.

In a possible implementation, the content information further includes at least one of the following:
CRI;
RI;
CQI; and
PMI.

In a possible implementation, the frequency domain information includes information about at least one subband, or wideband.

In a possible implementation, the codebook configuration includes codebook subset restriction information, rank restriction information, and codebook configuration parameter information.

In a possible implementation, the target time domain information includes at least one of the following:
information about the target time domain channel, where the information about the target time domain channel includes channel information obtained by the terminal based on a channel state information reference signal CSI-RS at the plurality of occasions;
correlation information of the target time domain channel, where the correlation information of the target time domain channel includes characteristic information of channel information at the plurality of occasions; and
Doppler domain channel information, where the Doppler domain channel information includes information obtained by transforming the characteristic information in a predetermined manner.

In a possible implementation, that the first transceiver module 501 receives the first report reported by the terminal on the target resource includes:
monitoring, on the target resource, UCI bits transmitted by the terminal to obtain the first report.

In a possible implementation, the first transceiver module 501 monitoring the UCI bits sequence transmitted by the terminal includes:
monitoring, on the target resource, a first UCI bit sequence and a second UCI bit sequence, obtaining another parameter in the first report from the first UCI bit sequence, and obtaining the target time domain information from the second UCI bit sequence, where the another parameter is a parameter in the first report other than the target time domain information.

In a possible implementation, the first UCI bit sequence further includes sixth indication information, where the sixth indication information is used to indicate a bit length of the second UCI bit sequence, or the sixth indication information is used for determining the bit length of the second UCI bit sequence.

The terminal scheduling apparatus in this embodiment of this application may be an apparatus, or may be a component, an integrated circuit, or a chip in a network-side device. The network-side device may include, but is not limited to, the types of the base station 12 listed above, which is not specifically limited in this embodiment of this application.

The terminal scheduling apparatus in this embodiment of this application may be an apparatus with an operating system. The operating system may be an Android (Android) operating system, an iOS operating system, or other possible operating systems, and is not specifically limited in the embodiments of this application.

The terminal scheduling apparatus provided in this embodiment of this application is capable of implementing the processes implemented by the network-side device in the method embodiments in FIG. 2 and FIG. 3, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and executable on the processor 601. For example, when the communication device 600 is a terminal and when the program or the instructions are executed by the processor 601, the processes of the foregoing embodiment of the channel information reporting method are implemented, with the same technical effects achieved. When the communication device 600 is a network-side device and when the program or the instructions are executed by the processor 601, the processes of the foregoing embodiment of the terminal scheduling method are implemented, with the same technical effects achieved. To avoid repetition, details are not described herein again.

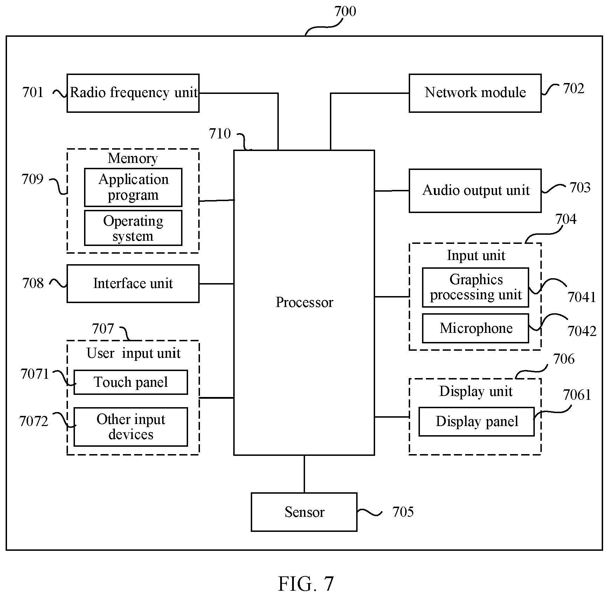

An embodiment of this application further provides a terminal, including a processor and a communication interface, the processor is configured to implement the processes of the foregoing embodiments of the channel information reporting method, and the communication interface is configured to communicate with the network-side device. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than those shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing; and also sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound playback function or an image playback function), and the like. In addition, the memory 709 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 710 may include one or more processing units. Optionally, an application processor and a modem processor may be integrated in the processor 710. This application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to obtain to-be-reported target time domain information based on a first report configuration, where the target time domain information is used to indicate channel change characteristics at a plurality of occasions; and
The radio frequency unit 701 is configured to report a first report on a target resource, where the first report includes the target time domain information, and the target resource is a reporting resource indicated by the first report configuration.

In the technical solution provided in the embodiments of this application, the terminal obtains, based on the first report configuration, the target time domain information indicating the channel change characteristics at the plurality of occasions, and then has the target time domain information included in the first report for reporting, so that the network-side device can obtain the channel change characteristics at the plurality of occasions to schedule the terminal based on the channel change characteristics at the plurality of occasions. This avoids the problem that channel incoherence may occur for an occasion of CSI measured by UE and an occasion of performing an operation such as precoding by using the CSI by a base station, resulting in degradation of system performance. In addition, the network-side device may perform channel prediction based on the channel change characteristics at the plurality of occasions, so as to improve accuracy of channel prediction.

An embodiment of this application further provides a network-side device, including a processor and a communication interface, the processor is configured to implement the processes of the foregoing embodiments of the terminal scheduling method, and the communication interface is configured to communicate with the terminal. The network-side device embodiments correspond to the foregoing network-side device method embodiments, and the implementation processes and implementations of the foregoing method embodiments can be applied to the network-side device embodiments, with the same technical effects achieved.

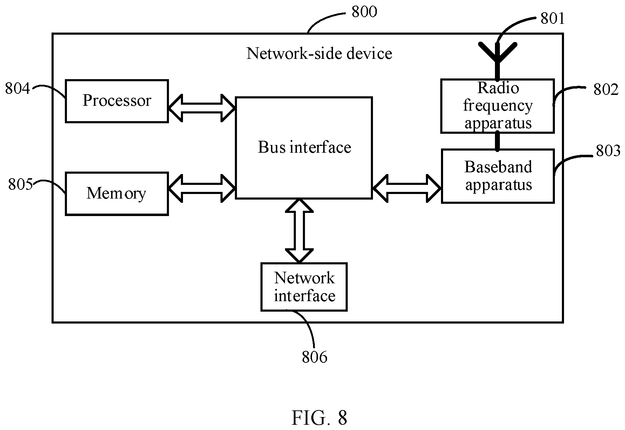

Specifically, an embodiment of this application further provides a network-side device. As shown in FIG. 8, the network-side device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The frequency band processing apparatus may be located in the baseband apparatus 803. The method performed by the network-side device in the foregoing embodiments may be implemented in the baseband apparatus 803, and the baseband apparatus 803 includes a processor 804 and a memory 805.

The baseband apparatus 803 may include, for example, at least one baseband processing unit, where a plurality of chips are disposed on the baseband processing unit. As shown in FIG. 8, one of the chips is, for example, the processor 804, connected to the memory 805, to invoke a program in the memory 805 to perform the operation of the network-side device shown in the foregoing method embodiment.

The baseband apparatus 803 may further include a network interface 806, configured to exchange information with the radio frequency apparatus 802, where the interface is, for example, a common public radio interface (common public radio interface, CPRI for short).

Specifically, the network-side device in this embodiment of this application further includes: instructions or a program stored in the memory 805 and executable on the processor 804. The processor 804 invokes the instructions or program in the memory 805 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the channel information reporting method are implemented or the processes of the foregoing embodiments of the terminal scheduling method are implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the channel information reporting method or the processes of the foregoing embodiments of the terminal scheduling method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory storage medium, and when being executed by at least one processor, the program/program product is configured to implement the processes of the foregoing embodiments of the channel information reporting method or the processes of the foregoing embodiments of the terminal scheduling method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A channel information reporting method, comprising:
obtaining, by a terminal, to-be-reported target time domain information based on a first report configuration, wherein the target time domain information is used to indicate channel change characteristics at a plurality of occasions; and
reporting, by the terminal, a first report on a target resource, wherein the first report comprises the target time domain information, and the target resource is a reporting resource indicated by the first report configuration.

2. The method according to claim 1, wherein the target time domain information comprises at least one of the following:
information about a target time domain channel, wherein the information about the target time domain channel comprises channel information obtained by the terminal based on a channel state information reference signal CSI-RS at the plurality of occasions;
correlation information of the target time domain channel, wherein the correlation information of the target time domain channel comprises characteristic information of the channel information at the plurality of occasions; and
Doppler domain channel information, wherein the Doppler domain channel information comprises information obtained by transforming the characteristic information in a predetermined manner.

3. The method according to claim 1, wherein the first report configuration comprises at least one of the following:
first indication information, wherein the first indication information is used to indicate content information reported in the first report, wherein the content information comprises the target time domain information;
second indication information, wherein the second indication information is used to indicate frequency domain information corresponding to the target time domain information;
third indication information, wherein the third indication information is used to indicate a codebook configuration associated with the target time domain information; and
fourth indication information, wherein the fourth indication information is used to indicate at least one of the following: a measurement resource corresponding to the target time domain information and a measurement port corresponding to the target time domain information.

4. The method according to claim 3, wherein the content information further comprises at least one of the following:
CSI-RS resource indicator CRI;
rank indicator RI;
information quality indicator CQI; and
precoding matrix indicator PMI.

5. The method according to claim 3, wherein the frequency domain information comprises information about at least one subband, or wideband.

6. The method according to claim 3, wherein the codebook configuration comprises codebook subset restriction information, rank restriction information, and codebook configuration parameter information.

7. The method according to claim 1, wherein the obtaining to-be-reported target time domain information comprises:
performing channel measurement on at least one channel measurement resource CMR at each of the plurality of occasions to obtain measurement results of a plurality of channels; and
obtaining the to-be-reported target time domain information based on the measurement results of the plurality of channels.

8. The method according to claim 7, wherein the performing channel measurement on at least one channel measurement resource at each of the plurality of occasions comprises:
obtaining a plurality of CMRs based on CSI-RS information configured or indicated by a network-side device, wherein time domains occupied by the CMRs are not completely identical, and the CSI-RS information comprises one of the following: a plurality of CSI-RS resources, at least one CSI-RS resource set, and at least one CSI-RS resource group; and
performing channel measurement on the plurality of CMRs.

9. The method according to claim 7, wherein the performing channel measurement on at least one channel measurement resource at each of the plurality of occasions comprises:
obtaining a target measurement resource and/or a target measurement port indicated by fourth indication information in the first report configuration, wherein the fourth indication information is used to indicate at least one of the following: a measurement resource corresponding to the target time domain information and a measurement port corresponding to the target time domain information; and
performing channel measurement on the target measurement resource and/or the target measurement port at each of the plurality of occasions.

10. The method according to claim 7, wherein the obtaining the to-be-reported target time domain information based on the measurement results of the plurality of channels comprises:
obtaining measurement results of a plurality of target channels based on the measurement results of the plurality of channels; and
using the measurement results of the plurality of target channels as the to-be-reported target time domain information.

11. The method according to claim 7, wherein the obtaining the to-be-reported target time domain information based on the measurement results of the plurality of channels comprises:
obtaining measurement results of a plurality of target channels based on the measurement results of the plurality of channels; and
calculating a plurality of eigenvectors and/or a plurality of eigenvalues of an autocorrelation matrix of a target matrix, wherein the target matrix comprises the measurement results of the plurality of target channels, and the target time domain information comprises at least one of the following: the plurality of eigenvectors and the plurality of eigenvalues.

12. The method according to claim 7, wherein the obtaining the to-be-reported target time domain information based on the measurement results of the plurality of channels comprises:
obtaining measurement results of a plurality of target channels based on the measurement results of the plurality of channels;
calculating a plurality of eigenvectors and a plurality of eigenvalues of an autocorrelation matrix of a target matrix, wherein the target matrix is formed by the measurement results of the plurality of target channels;
performing, based on a preset discrete Fourier transform matrix, discrete Fourier transform on a matrix formed by the eigenvectors;
selecting at least one specific value from each column of a transformed matrix; and
obtaining the target time domain information based on a plurality of selected specific values, wherein the target time domain information comprises each specific value and a row vector identifier of a discrete Fourier transform matrix corresponding to the each specific value, or the target time domain information comprises each specific value, a row vector identifier of the discrete Fourier transform matrix corresponding to the each specific value, and an eigenvalue corresponding to the each specific value.

13. The method according to claim 12, wherein the number of specific values selected from the each column of the transformed matrix is configured by a network-side device, or the number of specific values selected from the each column of the transformed matrix is selected by the terminal.

14. The method according to claim 13, wherein the target time domain information further comprises the number of specific values that is selected by the terminal from the each column of the transformed matrix.

15. The method according to any one of claims 10 to 14, wherein the obtaining measurement results of a plurality of target channels based on the measurement results of the plurality of channels comprises:
selecting measurement results of a plurality of target channels corresponding to first information from the measurement results of the plurality of channels, wherein the first information comprises at least one of the following: at least one pair of transceiver ports and at least one carrier.

16. The method according to claim 15, wherein the first information is configured by the network-side device, or the first information is selected by the terminal.

17. The method according to claim 16, wherein the target time domain information further comprises the first information selected by the terminal.

18. The method according to any one of claims 11 to 14, wherein the eigenvalues are not comprised in the target time domain information in a case that the terminal sets no normalization operation to be performed on an eigenvector or the network-side device indicates no normalization operation to be performed on an eigenvector.

19. The method according to claim 1, wherein the reporting, by the terminal, a first report on a target resource comprises:
generating the first report; and
mapping the first report onto an uplink control information UCI bit sequence on the target resource.

20. The method according to claim 19, wherein in a case that a granularity of PMI and/or a granularity of CQI reported by the first report configured in the first report configuration are wideband, the generating the first report comprises one of the following:
in a case that second indication information in the first report configuration indicates wideband or information about at least one subband, and that the first report corresponding to the first report configuration contains only a first part, mapping the target time domain information and another parameter in the first report onto the first part, with a mapping position of the target time domain information being behind a mapping position of the another parameter in the first report, wherein the second indication information is used to indicate frequency domain information corresponding to the target time domain information, and the another parameter is a parameter in the first report other than the target time domain information; and
in a case that the second indication information in the first report configuration indicates information about at least one subband, and that the first report corresponding to the first report configuration comprises a first part and a second part, mapping the another parameter in the first report onto the first part, and mapping the target time domain information onto the second part.

21. The method according to claim 19, wherein in a case that a granularity of PMI and/or a granularity of CQI reported by the first report configured in the first report configuration is at least one subband, the generating the first report comprises the following:
in a case that the first report corresponding to the first report configuration contains a first part and a second part, mapping the target time domain information and another parameter comprised in the second part of the first report onto the second part, with a mapping position of the target time domain information being behind a mapping position of the another parameter, wherein the another parameter in the second part is a parameter in the second part of the first report other than the target time domain information.

22. The method according to claim 20 or 21, wherein in a case that the target time domain information comprises information selected by the terminal, the first part further comprises indication information for indicating a bit length of the second part.

23. The method according to claim 20 or 21, wherein in a case that the terminal determines the target time domain information based on information selected by the terminal, the first part further comprises the information selected by the terminal.

24. The method according to claim 19, wherein the mapping the first report onto an uplink control information UCI bit sequence on the target resource comprises one of the following:
generating a first UCI bit sequence based on another parameter in the first report, generating a second UCI bit sequence based on the target time domain information, and mapping a UCI bit sequence comprising the first UCI bit sequence and the second UCI bit sequence onto the target resource; and
generating a first UCI bit sequence based on a first part in the first report, generating a second UCI bit sequence based on a second part in the first report, and mapping a UCI bit sequence comprising the first UCI bit sequence and the second UCI bit sequence onto the target resource, wherein the second part comprises the target time domain information.

25. The method according to claim 24, wherein the first UCI bit sequence further comprises sixth indication information, wherein the sixth indication information is used to indicate a bit length of the second UCI bit sequence, or the sixth indication information is used for determining the bit length of the second UCI bit sequence.

26. The method according to claim 24, wherein a bit length of the second UCI bit sequence comprises a length of a subsequence, related to the target time domain information, in the second UCI bit sequence.

27. A terminal scheduling method, comprising:
receiving, by a network-side device, a first report reported by a terminal on a target resource, wherein the first report comprises target time domain information, and the target time domain information is used to indicate channel change characteristics at a plurality of occasions; and
scheduling, by the network-side device, the terminal based on the target time domain information.

28. The method according to claim 27, wherein before the receiving, by a network-side device, a first report reported by a terminal on a target resource, the method further comprises:
sending, by the network-side device, a first report configuration to the terminal, wherein the first report configuration comprises indication information of the target resource.

29. The method according to claim 28, wherein the first report configuration further comprises at least one of the following:
first indication information, wherein the first indication information is used to indicate content information reported in the first report, wherein the content information comprises the target time domain information;
second indication information, wherein the second indication information is used to indicate frequency domain information corresponding to the target time domain information;
third indication information, wherein the third indication information is used to indicate a codebook configuration associated with the target time domain information; and
fourth indication information, wherein the fourth indication information is used to indicate at least one of the following: a measurement resource corresponding to the target time domain information and a measurement port corresponding to the target time domain information.

30. The method according to claim 29, wherein the content information further comprises at least one of the following:
channel state information reference signal CSI-RS resource indicator CRI;
rank indicator RI;
information quality indicator CQI; and
precoding matrix indicator PMI.

31. The method according to claim 30, wherein the frequency domain information comprises information about at least one subband, or wideband.

32. The method according to claim 30, wherein the codebook configuration comprises codebook subset restriction information, rank restriction information, and codebook configuration parameter information.

33. The method according to claim 27, wherein the target time domain information comprises at least one of the following:
information about a target time domain channel, wherein the information about the target time domain channel comprises channel information obtained by the terminal based on a channel state information reference signal CSI-RS at the plurality of occasions;
correlation information of the target time domain channel, wherein the correlation information of the target time domain channel comprises characteristic information of the channel information at the plurality of occasions; and
Doppler domain channel information, wherein the Doppler domain channel information comprises information obtained by transforming the characteristic information in a predetermined manner.

34. The method according to claim 27, wherein the receiving, by a network-side device, a first report reported by a terminal on a target resource comprises:
monitoring, on the target resource, a UCI bit sequence transmitted by the terminal to obtain the first report.

35. The method according to claim 34, wherein the monitoring UCI bits transmitted by the terminal comprises:
monitoring, on the target resource, a first UCI bit sequence and a second UCI bit sequence, obtaining another parameter in the first report from the first UCI bit sequence, and obtaining the target time domain information from the second UCI bit sequence, wherein the another parameter is a parameter in the first report other than the target time domain information.

36. The method according to claim 35, wherein the first UCI bit sequence further comprises sixth indication information, wherein the sixth indication information is used to indicate a bit length of the second UCI bit sequence, or the sixth indication information is used for determining the bit length of the second UCI bit sequence.

37. A channel information reporting apparatus, comprising:
an obtaining module, configured to obtain to-be-reported target time domain information based on a first report configuration, wherein the target time domain information is used to indicate channel change characteristics at a plurality of occasions; and
a first transceiver module, configured to report a first report on a target resource, wherein the first report comprises the target time domain information, and the target resource is a reporting resource indicated by the first report configuration.

38. A terminal scheduling apparatus, comprising:
a second transceiver module, configured to receive a first report reported by a terminal on a target resource, wherein the first report comprises target time domain information, and the target time domain information is used to indicate channel change characteristics at a plurality of occasions; and
a scheduling module, configured to schedule the terminal based on the target time domain information.

39. A terminal, comprising a processor, a memory, and a program or instructions stored in the memory and executable on the processor, wherein when the program or the instructions are executed by the processor, steps of the channel information reporting method according to any one of claims 1 to 26 are implemented.

40. A network-side device, comprising a processor, a memory, and a program or instructions stored in the memory and executable on the processor, wherein when the program or the instructions are executed by the processor, steps of the terminal scheduling method according to any one of claims 27 to 36 are implemented.

41. A readable storage medium, wherein the readable storage medium has a program or instructions stored thereon, and when the program or the instructions are executed by a processor, steps of the channel information reporting method according to any one of claims 1 to 26 are implemented, or steps of the terminal scheduling method according to any one of claims 27 to 36 are implemented.
